# EUROPEAN PATENT APPLICATION

(11) **EP 4 679 313 A1**
(43) Date of publication of application: **14.01.2026**
(21) Application number: 25185012.9
(22) Date of filing: 24.06.2025
(51) Int. Cl.: G06F 40/216, G06F 40/247, G06F 40/284, G06F 40/295, G06F 40/30, G06F 40/35, G06F 40/44, G06F 40/56

(54) **COMPUTING SYSTEM FOR IDENTIFYING HALLUCINATIONS IN GENERATIVE ARTIFICIAL INTELLIGENCE OUTPUT**

(30) Priority: 10.07.2024 US 202418769147
(71) Applicant: The Boeing Company, Arlington, VA 22202 (US)
(72) Inventor: AUGUSTINE, DAVID, Arlington, 22202 (US); NGUYEN, HAI CHIEU, Arlington, 22202 (US); LASTOSKIE, KATHERINE, Arlington, 22202 (US); WEBB, LEIGH, Arlington, 22202 (US)
(74) Representative: Bugnion S.p.A. - US1

(57) **Abstract**

A computing system for identifying hallucinations in generative artificial intelligence (AI) output includes processing circuitry configured to receive a text output generated by a generative large language model (LLM) in response to an input prompt including origin source text data, and using an entity extraction model, extract entities from the text output and from the origin source text data. The processing circuitry, using a semantic pairing model, forms first semantic pairs from the entities of the text output and second semantic pairs from the entities of the origin source text data, and using a semantic similarity model, semantically compares the first semantic pairs with the second semantic pairs. The processing circuitry, based on at least the comparison, classifies whether or not any of the first semantic pairs is a hallucination, and outputs an indication of the classification.

## Description

### FIELD

The present disclosure relates generally to artificial intelligence and more particularly to large language model (LLM) error reduction.

### BACKGROUND

Generative language models such as LLMs are known to occasionally produce responses that are factually inaccurate, illogical, or incoherent, which is a phenomenon known as "hallucination." In many fields and domains that have recently begun to incorporate AI, it is imperative that information is accurate and the response from a generative model does not contain inaccurate or misleading statements. Although efforts to combat hallucination such as parametric tuning and reinforcement learning from human feedback can have a positive impact, the level of human intervention needed is often unsustainable or unscalable for many organizations, and can even induce further errors.

Meanwhile, the field of aviation requires many documents and reports in order to maintain safety and compliance with regulations. These reports are historically generated purely by humans, which is a time-consuming task for highly trained individuals with other duties to which to attend. However, attempting to reduce the drafting load on these individuals with the aid of generative language models has a high risk of generating hallucinations, which is unacceptable.

### SUMMARY

To address the above issues, according to one aspect of the present disclosure, a computing system for identifying hallucinations in generative artificial intelligence (AI) output is provided herein. In this aspect, the computing system includes processing circuitry configured to receive a text output generated by a generative large language model (LLM) in response to an input prompt including origin source text data, and using an entity extraction model, extract entities from the text output and from the origin source text data. The processing circuitry, using a semantic pairing model, forms first semantic pairs from the entities of the text output and second semantic pairs from the entities of the origin source text data, and using a semantic similarity model, semantically compares the first semantic pairs with the second semantic pairs. The processing circuitry, based on at least the comparison, classifies whether or not any of the first semantic pairs is a hallucination, and outputs an indication of the classification. Another aspect of the present disclosure relates to a method for identifying hallucinations in generative artificial intelligence (AI) output. The method comprises receiving a text output generated by a generative large language model (LLM) in response to an input prompt including origin source text data, and extracting entities from the text output and from the origin source text data. The method includes forming first semantic pairs from the entities of the text output and second semantic pairs from the entities of the origin source text data, and semantically comparing the first semantic pairs with the second semantic pairs. The method includes, based on at least the comparison, classifying whether or not any of the first semantic pairs is a hallucination, and outputting an indication of the classification.

Still another aspect of the present disclosure relates to a method for training a computing system for identifying hallucinations in generative artificial intelligence (AI) output.

The computing system includes processing circuitry configured to receive a text output generated by a generative large language model (LLM) in response to an input prompt including origin source text data, using an entity extraction model, extract entities from the text output and from the origin source text data, using a semantic pairing model, form first semantic pairs from the entities of the text output and second semantic pairs from the entities of the origin source text data, using a semantic similarity model, semantically compare the first semantic pairs with the second semantic pairs, based on at least the comparison, classify whether or not any of the first semantic pairs is a hallucination, and output an indication of the classification. The method for training comprises receiving or generating a domain knowledge base including text entities in a predetermined domain, training the entity extraction model on the domain knowledge base to extract entities relevant to the predetermined domain from input text, and training the semantic similarity model on the domain knowledge base to perform semantic comparison of input text in a manner that is sensitive to the predetermined domain.

### BRIEF DESCRIPTION OF THE DRAWINGS

FIG. 1 shows a schematic view of an example computing system according to the present disclosure.
FIG. 2 shows an example graphical user interface (GUI) displaying an output of the computing system of FIG. 1.
FIG. 3A is a flowchart of a method for identifying hallucinations in generative artificial intelligence (AI) output, while FIG. 3B is a flowchart of a method for training a computing system for identifying the hallucinations.
FIG. 4 is a schematic view of an example computing environment in which the computing system of FIG. 1 may be enacted.

### DETAILED DESCRIPTION

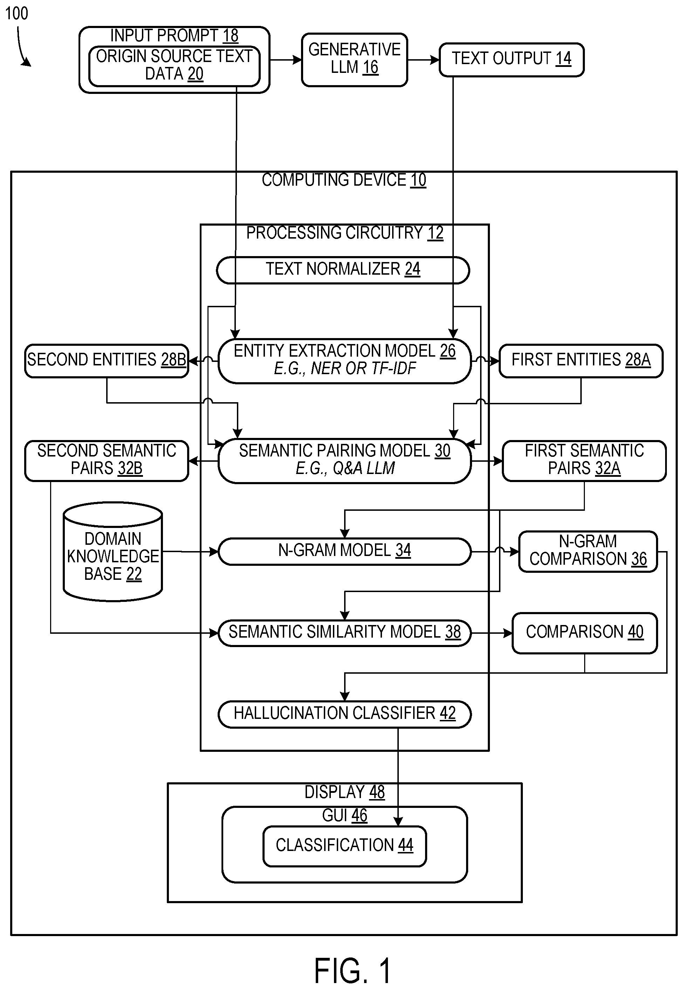

To address the issues discussed above, FIG. 1 illustrates a schematic view of an example computing system 100 for identifying hallucinations in generative artificial intelligence (AI) output according to the present disclosure. The computing system 100 includes one or more computing devices 10 including processing circuitry 12 configured to perform various functions. For example, the processing circuitry 12 may be configured to receive a text output 14 generated by a generative large language model (LLM) 16 in response to an input prompt 18 including origin source text data 20. The input prompt 18 may be, for example, "Summarize the attached document," with an attached document that includes the origin source text data. That is, the text output 14 of the LLM 16 may be a summary of the origin source text data 20. In some cases, the summary may be in a specified format, such as one meeting requirements of a specific regulatory report. In the field of aviation, this may include FAA safety reports such as Continued Operational Safety Program (COSP) reports. As mentioned above, being able to accurately incorporate the use of generative AI in this aspect could greatly reduce the administrative burden on employees charged with drafting such reports. As discussed above, the text output 14 generated by the LLM 16 may or may not include undesirable hallucinations. Attempting to detect such hallucinations using further generative models presents many challenges including improper training of the models, unavailable domain knowledge, training data that is contradictory or lacking factual data, models containing bias, and improper granularity level of the detection. Accordingly, the present disclosure instead makes use of semantic modeling and a deep domain knowledge base 22, as will be described below.

In some instances, the origin source text data may be originally presented in a format that is not suitable for semantic processing, e.g., in an email chain with headings, salutations, signature blocks, footers, special characters, spaces, images, etc. **In** such instances, the quality of the output may be improved by having the processing circuitry 12 be further configured to extract and normalize the origin source text data 20 from an origin source before proceeding to the next step, e.g., with a text normalizer 24. The text normalizer 24 may also similarly process the text output 14. The text normalizer 24 may be configured to strip non-text data, formatting, and extraneous text programmatically designated as not pertaining to the input prompt 18 and text output 14, and otherwise remove noise to put the origin source text data 20 and/or text output 14 in good condition for the various other models discussed below to produce suitable outputs.

Next, using an entity extraction model 26, the processing circuitry may be configured to extract entities 28A, 28B from the text output 14 and from the origin source text data 20. The entities (i.e., first entities 28A and second entities 28B) may be notable nouns, verbs, adjectives, etc. found within the processed text. Focusing on the entities 28A, 28B may ensure that the computing system 100 is aware of what substantive subjects, objects, actions, etc. are discussed in both the origin source text data 20 and the text output 14, which is helpful for later steps in identifying hallucinations. Examples of the entities 28A, 28B may include, in the field of aviation, "depleted," "unable," and "vibration." Suitable examples of the entity extraction model 26 include a named entity recognition (NER) model or a term frequency-inverse document frequency (TF-IDF) model. Both of these example models are able to extract substantive entities from text, increasing the accuracy of the hallucination determination. One specific example of the entity extraction model 26 is en _core _web_sm, published by spaCy. Each extracted entity 28A, 28B may include, for example, an index (e.g., how many characters into the line does the entity 28A, 28B start each time it appears); text constituting the entity 28A, 28B; and an entity type. The processing circuitry 12 may be further configured to, at training time, receive or generate a domain knowledge base 22 including text entities in a predetermined domain such as aviation or a specific organization or company. Then, the processing circuitry may be configured to train the entity extraction model 26 on the domain knowledge base 22 to extract entities 28A, 28B relevant to the predetermined domain from input text. By training in such a manner, the entity extraction model 26 may be made sensitive to words and phrases used in the domain or field, and increase accuracy and relevance in the hallucination detection.

Using a semantic pairing model 30, the processing circuitry 12 may be configured to form first semantic pairs 32A from the entities 28A of the text output 14 and second semantic pairs 32B from the entities 28B of the origin source text data 20. The semantic pairs 32A, 32B may be between two entities 28A, 28B, or may be between one entity 28A, 28B and other text from the respective source text (i.e., the origin source text data 20 and the text output 14). The semantic pairs 32A, 32B may pair context or an explanation of relevance with the paired entity 28A, 28B. For the example entities 28A, 28B discussed above, examples of the semantic pairs 32A, 32B may include "depleted-hydraulic fluid quantity," "unable-reengage lnav mode," and "vibration-engine no. 2," where "lnav" is an abbreviation for "logfile navigator." One example of the semantic pairing model 30 is a question and answer (Q&A) LLM. The Q&A LLM can be, for example, a retrieval augmented generation system including a pre-trained retriever and a generator configured to make calls to the Q&A LLM. One specific example of the semantic pairing model 30 is tinyroberta-squad2, published by Hugging Face. The Q&A LLM may be configured to receive the entity 28A, 28B and process prompt, "What is [ENTITY]?" or similar, and the resulting output may be a short phrase or word paired with the entity 28A, 28B.

In some cases, the processing circuitry 12 may be further configured to, using an n-gram model 34, perform an n-gram comparison 36 between the first semantic pairs 32A and data of the domain knowledge base 22 of human-generated text. The n-gram comparison 36 compares the first semantic pairs 32A with a known domain corpus of data in the domain knowledge base 22 to check whether the pairing of the phrase is feasible within the field or domain. **In** the field of aviation, the domain knowledge base 22 may be, for example, a large repository of years of data from a company including lists of components, functions, processes, and historical write-ups and reports drafted by humans rather than LLMs. The n-grams may be bi-grams, tri-grams, etc. The n-gram model 34 may be configured to indicate a probability that each first semantic pair 32A, which was generated by the generative LLM 16, are genuine or possible in the domain. Optionally, the probability may be a simple binary as to whether the first semantic pair 32A is ever found in the domain knowledge base 22, or found at least a preset threshold number of times. The result of the n-gram comparison 36 may be taken into account when detecting hallucinations, as pairs not found in the domain knowledge base 22, or only rarely found, may be more likely to be hallucinations from the generative LLM 16. For example, the pairing of "wing flap" with "inch" in close proximity is somewhat odd, and not being found in the domain knowledge base 22 may influence the determination that the text output 14 includes hallucinations.

The processing circuitry 12 may, using a semantic similarity model 38, semantically compare the first semantic pairs 32A with the second semantic pairs 32B (i.e., perform a comparison 40). The comparison 40 is performed on a semantic basis (i.e., by meaning), not a lexical basis (i.e., by character or word). Thus, the semantic similarity model 38 may be able to take into account words or phrases with similar meanings even though they are written differently, and output a determination that the semantic pairs 32A, 32B are still semantically similar. For example, remove and replace, or depleted and ran low, are two sets of semantically similar terms, and a text output 14 using one of these words or phrases while the origin source text data 20 uses the other in the set would not be falsely flagged as a hallucination based on word choice. However, if the semantic pairs 32A, 32B are too far apart in meaning, the first semantic pair 32A is marked as suspect for the hallucination determination.

The threshold leading to marking as suspect may be adjustable by a user or preset by a developer. A first semantic pair 32A not having a corresponding second semantic pair 32B, in other words, a phrase in the text output 14 not found in even a roughly similar form in the origin source text data 20, may also lead to a finding of "suspect." One example of the semantic similarity model 38 is a sentence transformer. One specific example of the semantic similarity model 38 is bert-base-uncased, published by Hugging Face. The semantic similarity model 38 may be open source and ready to use as-is, or the processing circuitry 12 may be further configured to, at training time, train the semantic similarity model 38 on the domain knowledge base 22 to perform semantic comparison of input text in a manner that is sensitive to the predetermined domain. That is, the model may be trained or fine-tuned to not only be aware of the vocabulary used in the field or domain, but also biased to find phrases not used in the domain knowledge base 22 suspect.

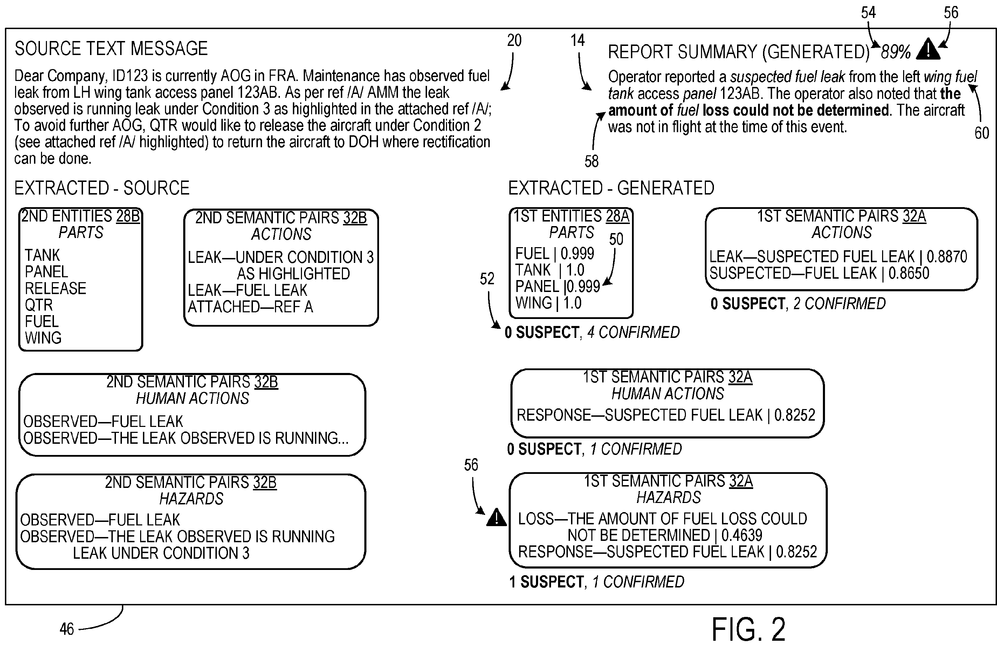

The computing device 10 may further include a hallucination classifier 42. The processing circuitry 12 may be configured to, based on at least the comparison 40 by the semantic similarity model 38, classify whether or not any of the first semantic pairs 32A is a hallucination, i.e., produce a classification 44. If the n-gram comparison discussed above is performed, then the classification 44 may be performed based on at least the (semantic) comparison 40 and the n-gram comparison 36, to increase accuracy of the classification. The hallucination classifier 42 may be a model that predicts a hallucination classification for each of the first semantic pairs 32A, to thereby to classify whether or not any of the first semantic pairs 32A is a hallucination, or may be a simple programmatic function to compute an output based on the comparison 40 and/or n-gram comparison 36. Finally, the processing circuitry may be configured to output an indication of the classification 44, as is discussed in more detail below with reference to FIG. 2. The output may be displayed in a graphical user interface (GUI) 46 of a display 48 of the computing device 10, for example.

FIG. 2 shows an example of the GUI 46 of the display 48. It will be appreciated that the display 48 (see FIG. 1) displaying the GUI 46 may be associated with a separate computing device 10 than the one performing the hallucination classification, such as in a client-server or cloud computing configuration. Furthermore, the GUI 46 of FIG. 2 is merely an example provided for illustration and many modifications may be made. For instance, the illustrated example may be more suitable as a developer view, and a client view or customer view may be simplified and more graphics heavy.

As in FIG. 2, the left side of the GUI 46 may be dedicated to the original source, with the origin source text data 20 displayed at the top, while the right side may be dedicated to the output of the generative LLM 16, with the text output 14 displayed at the top. Below the respective text data, the first and second entities 28A, 28B extracted by the entity extraction model 26 may be displayed. An associated probability 50 for each of the first entities 28A may indicate a result of the n-gram comparison 36 and/or the semantic comparison 40. In the illustrated example, the first entities 28A FUEL, TANK, PANEL, and WING all have the probability 50 of approximately 1, indicating that they are all confirmed and none are suspect. Here, an indication 52 of 0 suspect and 4 confirmed is displayed corresponding to the classification 44. The classification 44 may include a positive hallucination classification (e.g., 0 suspect) and/or a negative hallucination classification (e.g., 4 confirmed).

In some instances, the GUI 46 may display the indication in such a manner that the indication includes a displayed overall probability or determination 54 that at least one of the first semantic pairs 32A is a hallucination. Here, the overall probability or determination 54 is 89%, that is, the hallucination classifier 42 found that the generated text output 14 was 89% accurate. More specifically, the percentage may be calculated by calculating how many first semantic pairs 32A and first entities 28A were found to be suspect or confirmed. For example, 1 in 10 classified as suspect may be a 90% accuracy. However, the accuracy could be weighted based on, for example, a certainty of the suspected hallucination. Alternatively or additionally, an icon 56 may alert the user that the probability or accuracy is below a threshold.

The first semantic pairs 32A and second semantic pairs 32B have been sorted into separate categories for display in FIG. 2, but may instead be displayed in total without being sorted. The indication may visually indicate at least one of the first semantic pairs 32A that is classified as a hallucination within the output text with one or more of font formatting (e.g., bold, underline, italics, name, size, highlighting, background, etc.), color, labels, shapes, symbols, and icons. The various options provide for many clear ways to quickly and accurately convey to the user whether or not hallucinations are found. A number of such indications are illustrated in FIG. 2. For example, the icon 56 may also be placed next to the first semantic pair 32A LOSS-THE AMOUNT OF FUEL LOSS COULD NOT BE DETERMINED having a low score below a preset threshold which resulted in this first semantic pair 32A being marked as suspect. Throughout the GUI, an indication 58 of being suspect may be formatted similarly (e.g., red and bold) and in contrast to an indication 60 of being confirmed (e.g., green and italicized). The probability 50 itself for each first entity 28A and first semantic pair 32A may serve as the indication. **In** this manner, the indication may show the classification individually for each of the first semantic pairs 32A as a probability that each respective first semantic pair 32A is a hallucination, alternatively or in addition to the overall probability or determination 54. Furthermore, as shown in the text output 14 in the top left of the GUI 46, the various first semantic pairs 32A can be indicated in-line as suspect or confirmed with the corresponding font formatting, color, labels, shapes, symbols, and/or icons. As opposed to simply informing the user that a hallucination is found or is likely, such in-line indication can pinpoint probable issues for the user to quickly and easily confirm or correct. Thus, the generative LLM 16 may be used as a helpful tool for the user to craft the text output 14 while also allowing the user an opportunity to verify or correct the final output in an expedient manner.

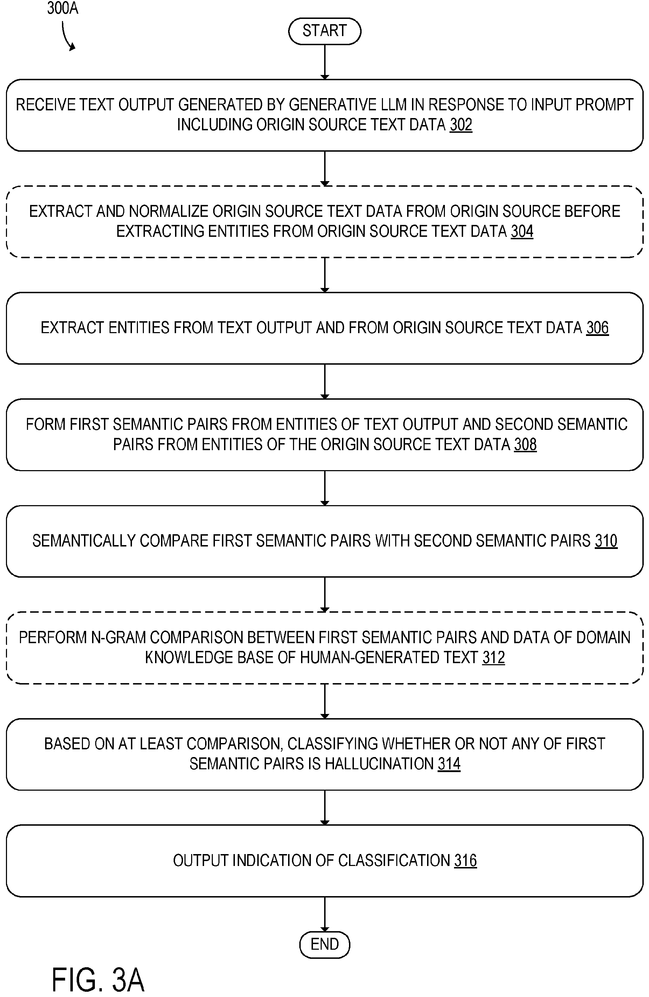

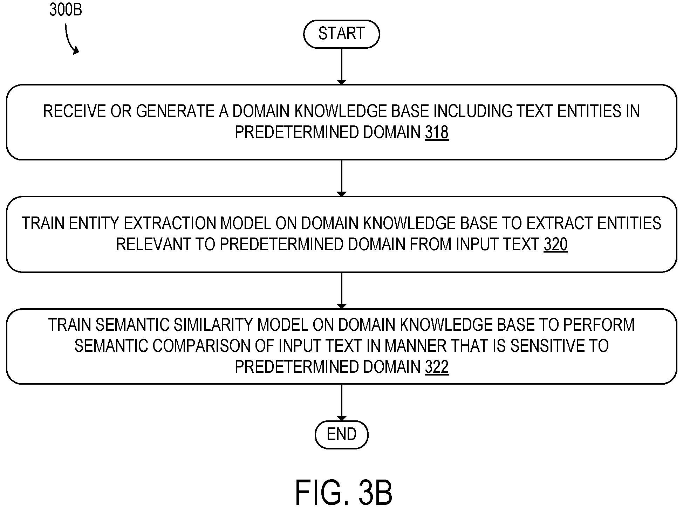

FIG. 3A is a flowchart of a method 300A for identifying hallucinations in generative AI output, while FIG. 3B is a flowchart of a method 300B for training a computing system for identifying the hallucinations. The following description of methods 300A, 300B is provided with reference to the computing system 100 described above and shown in FIG. 1. It will be appreciated that methods 300A, 300B may also be performed in other contexts using other suitable components.

With reference to FIG. 3A, at 302, the method 300A includes receiving a text output generated by a generative large language model (LLM) in response to an input prompt including origin source text data. LLMs are becoming more and more commonly used in assisting humans in drafting various types of writing. **In** some instances, the text output of the LLM may be a summary of the origin source text data. **In** this case, the human drafter may be wary of hallucination contained within the summary, but both generative techniques for detecting hallucination and manual human review have significant drawbacks in efficacy and time.

Optionally, at 304, the method 300A may include extracting and normalizing the origin source text data from an origin source before extracting the entities from the origin source text data in 306. As discussed above, normalizing the origin source text data (and optionally, the output text to ensure that a downstream comparison is made with equal inputs) may remove noise and improve the quality of the output. At 306, the method 300A may include extracting entities from the text output and from the origin source text data. The entity extraction may be performed using a named entity recognition (NER) model or a term frequency-inverse document frequency (TF-IDF) model, for example. These examples are able to extract substantive entities from text, increasing the accuracy of the downstream hallucination determination.

At 308, the method 300A may include forming first semantic pairs from the entities of the text output and second semantic pairs from the entities of the origin source text data. The pairs may be formed between one of the entities and a context word or short phrase that succinctly explains the relevance of the entity as used in the text. Examples of the semantic pairs in the field of aviation may include "takeoff-IAS disagree," "crack-innerchord," and "noticed-a very strong smell," where IAS stands for "indicated airspeed." Forming the semantic pairs ensures that any analysis for detecting hallucinations is taking into account the way the entities are used, and not merely the presence or absence of the entities. Thus, if the original context was a positive statement that was reversed into a negative statement in the generated text output of the generative LLM, then merely checking for the same unique words before and after the LLM could fail to detect this hallucination.

At 310, the method 300A may include semantically comparing the first semantic pairs with the second semantic pairs. As discussed above, the semantic comparison has an advantage over lexical comparison by taking into account the meaning of the words used, including synonyms etc. up to a specified degree of similarity. At 312, the method 300A may optionally include further comprising performing an n-gram comparison between the first semantic pairs and data of a domain knowledge base of human-generated text. The n-gram comparison can further increase the accuracy of hallucination detection by ensuring that the generated content from the LLM makes sense within the context of the domain or field such as aviation or a specific company. At 314, the method 300A may include, based on at least the comparison, classifying whether or not any of the first semantic pairs is a hallucination. If the n-gram comparison is performed at 312, then the classification is performed based on at least the comparison and the n-gram comparison. At 316, the method 300A may include outputting an indication of the classification. Examples of the output are shown in FIG. 2, such as a displayed overall probability or determination that at least one of the first semantic pairs is a hallucination. With this example, the user can easily tell at a glance how well the generative LLM performed at this specific task and whether further review is needed. However, the computing system is capable of more specific indication, such as when the indication visually indicates at least one of the first semantic pairs that is classified as a hallucination within the output text with one or more of font formatting, color, labels, shapes, symbols, and icons. This type of in-line indication is more complex and helpfully points out for the user which semantic pairs and where in the generated text is likely a problem or not so that the user can quickly and easily review and/or correct the generated output text. Further, the indication may show the classification individually for each of the first semantic pairs as a probability that each respective first semantic pair is a hallucination, so that the user can be informed how certain the determination is and therefore make corrections more judicially.

Turning to FIG. 3B, the method 300B for training a computing system to be capable of performing the method 300A is explained. At 318, the method 300B may include receiving or generating a domain knowledge base including text entities in a predetermined domain. The domain knowledge base may be, for example, a large repository of years of data from a company or specific field including lists of components, functions, processes, and historical write-ups and reports. The domain knowledge base has multiple uses in both training/fine-tuning and runtime applications. For instance, at 320, the method 300B may include training the entity extraction model on the domain knowledge base to extract entities relevant to the predetermined domain from input text. Thus, the entity extraction model can be trained to be knowledgeable of terminology in the field or domain and increase accuracy in extraction. Further, at 322, the method 300B may include training the semantic similarity model on the domain knowledge base to perform semantic comparison of input text in a manner that is sensitive to the predetermined domain. **In** this manner, the semantic similarity model can be taught the meaning of words as used in the field and domain, which may be different than lay use, and therefore increase the accuracy when paring the entities to context.

In some embodiments, the methods and processes described herein may be tied to a computing system of one or more computing devices. **In** particular, such methods and processes may be implemented as a computer-application program or service, an application-programming interface (API), a library, and/or other computer-program product.

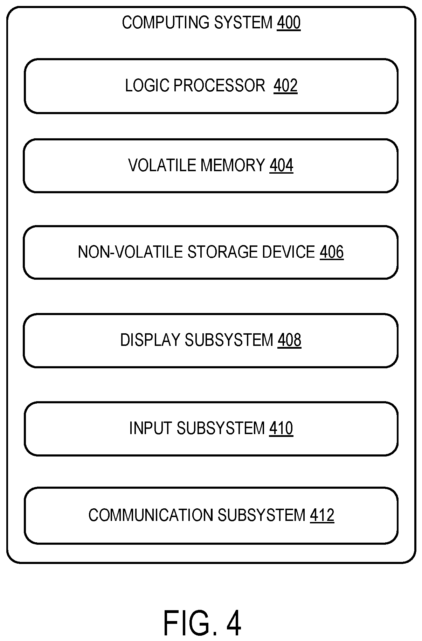

FIG. 4 schematically shows a non-limiting embodiment of a computing system 400 that can enact one or more of the methods and processes described above. Computing system 400 is shown in simplified form. Computing system 400 may embody the computing system 100 described above and illustrated in FIG. 1. Components of computing system 400 may be included in one or more personal computers, server computers, tablet computers, home-entertainment computers, network computing devices, video game devices, mobile computing devices, mobile communication devices (e.g., smartphone), and/or other computing devices, and wearable computing devices such as smart wristwatches and head mounted augmented reality devices.

Computing system 400 includes a logic processor 402 volatile memory 404, and a non-volatile storage device 406. Computing system 400 may optionally include a display subsystem 408, input subsystem 410, communication subsystem 412, and/or other components not shown in FIG. 4.

Logic processor 402 includes one or more physical devices configured to execute instructions. For example, the logic processor may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result. The logic processor may include one or more physical processors configured to execute software instructions. Additionally or alternatively, the logic processor may include one or more hardware logic circuits or firmware devices configured to execute hardware-implemented logic or firmware instructions. Processors of the logic processor 402 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor may be virtualized and executed by remotely accessible, networked computing devices configured in a cloud-computing configuration. **In** such a case, these virtualized aspects are run on different physical logic processors of various different machines, it will be understood.

Non-volatile storage device 406 includes one or more physical devices configured to hold instructions executable by the logic processors to implement the methods and processes described herein. When such methods and processes are implemented, the state of non-volatile storage device 406 may be transformed-e.g., to hold different data.

Non-volatile storage device 406 may include physical devices that are removable and/or built in. Non-volatile storage device 406 may include optical memory, semiconductor memory, and/or magnetic memory, or other mass storage device technology. Non-volatile storage device 406 may include nonvolatile, dynamic, static, read/write, read-only, sequential-access, location-addressable, file-addressable, and/or content-addressable devices. It will be appreciated that non-volatile storage device 406 is configured to hold instructions even when power is cut to the non-volatile storage device 406.

Volatile memory 404 may include physical devices that include random access memory. Volatile memory 404 is typically utilized by logic processor 402 to temporarily store information during processing of software instructions. It will be appreciated that volatile memory 404 typically does not continue to store instructions when power is cut to the volatile memory 404.

Aspects of logic processor 402, volatile memory 404, and non-volatile storage device 406 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 400 typically implemented in software by a processor to perform a particular function using portions of volatile memory, which function involves transformative processing that specially configures the processor to perform the function. Thus, a module, program, or engine may be instantiated via logic processor 402 executing instructions held by non-volatile storage device 406, using portions of volatile memory 404. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 408 may be used to present a visual representation of data held by non-volatile storage device 406. The visual representation may take the form of a graphical user interface (GUI). As the herein described methods and processes change the data held by the non-volatile storage device, and thus transform the state of the non-volatile storage device, the state of display subsystem 408 may likewise be transformed to visually represent changes in the underlying data. Display subsystem 408 may include one or more display devices utilizing virtually any type of technology. Such display devices may be combined with logic processor 402, volatile memory 404, and/or non-volatile storage device 406 in a shared enclosure, or such display devices may be peripheral display devices.

When included, input subsystem 410 may comprise or interface with one or more user-input devices such as a keyboard, mouse, touch screen, camera, or microphone. When included, communication subsystem 412 may be configured to communicatively couple various computing devices described herein with each other, and with other devices. Communication subsystem 412 may include wired and/or wireless communication devices compatible with one or more different communication protocols. As non-limiting examples, the communication subsystem may be configured for communication via a wired or wireless local- or wide-area network, broadband cellular network, etc. **In** some embodiments, the communication subsystem may allow computing system 400 to send and/or receive messages to and/or from other devices via a network such as the Internet.

The following paragraphs provide additional description of the subject matter of the present application. One aspect provides a computing system for identifying hallucinations in generative artificial intelligence (AI) output. The computing system comprises processing circuitry configured to receive a text output generated by a generative large language model (LLM) in response to an input prompt including origin source text data, using an entity extraction model, extract entities from the text output and from the origin source text data, using a semantic pairing model, form first semantic pairs from the entities of the text output and second semantic pairs from the entities of the origin source text data, using a semantic similarity model, semantically compare the first semantic pairs with the second semantic pairs, based on at least the comparison, classify whether or not any of the first semantic pairs is a hallucination, and output an indication of the classification. In this aspect, additionally or alternatively, the indication includes a displayed overall probability or determination that at least one of the first semantic pairs is a hallucination. In this aspect, additionally or alternatively, the indication visually indicates at least one of the first semantic pairs that is classified as a hallucination within the output text with one or more of font formatting, color, labels, shapes, symbols, and icons. In this aspect, additionally or alternatively, the indication shows the classification individually for each of the first semantic pairs as a probability that each respective first semantic pair is a hallucination. In this aspect, additionally or alternatively, the entity extraction model is a named entity recognition (NER) model or a term frequency-inverse document frequency (TF-IDF) model. In this aspect, additionally or alternatively, the semantic pairing model is a question and answer (Q&A) LLM. In this aspect, additionally or alternatively, the text output of the LLM is a summary of the origin source text data. In this aspect, additionally or alternatively, the processing circuitry is further configured to extract and normalize the origin source text data from an origin source before using the entity extraction model to extract the entities from the origin source text data. In this aspect, additionally or alternatively, the processing circuitry is further configured to, using an n-gram model, perform an n-gram comparison between the first semantic pairs and data of a domain knowledge base of human-generated text, and the classification is performed based on at least the comparison and the n-gram comparison. In this aspect, additionally or alternatively, the processing circuitry is further configured to, at training time, receive or generate a domain knowledge base including text entities in a predetermined domain, and train the entity extraction model on the domain knowledge base to extract entities relevant to the predetermined domain from input text. **In** this aspect, additionally or alternatively, the semantic similarity model is a sentence transformer, and the processing circuitry is further configured to, at training time, receive or generate a domain knowledge base including text entities relevant to a predetermined domain, and train the semantic similarity model on the domain knowledge base to perform semantic comparison of input text in a manner that is sensitive to the predetermined domain. Another aspect provides a method for identifying hallucinations in generative artificial intelligence (AI) output. The method comprises receiving a text output generated by a generative large language model (LLM) in response to an input prompt including origin source text data, extracting entities from the text output and from the origin source text data, forming first semantic pairs from the entities of the text output and second semantic pairs from the entities of the origin source text data, semantically comparing the first semantic pairs with the second semantic pairs, based on at least the comparison, classifying whether or not any of the first semantic pairs is a hallucination, and outputting an indication of the classification. **In** this aspect, additionally or alternatively, the indication includes a displayed overall probability or determination that at least one of the first semantic pairs is a hallucination. **In** this aspect, additionally or alternatively, the indication visually indicates at least one of the first semantic pairs that is classified as a hallucination within the output text with one or more of font formatting, color, labels, shapes, symbols, and icons. **In** this aspect, additionally or alternatively, the indication shows the classification individually for each of the first semantic pairs as a probability that each respective first semantic pair is a hallucination. **In** this aspect, additionally or alternatively, the entity extraction is performed using a named entity recognition (NER) model or a term frequency-inverse document frequency (TF-IDF) model. **In** this aspect, additionally or alternatively, the text output of the LLM is a summary of the origin source text data. **In** this aspect, additionally or alternatively, the method further comprises extracting and normalizing the origin source text data from an origin source before extracting the entities from the origin source text data. **In** this aspect, additionally or alternatively, the method further comprises performing an n-gram comparison between the first semantic pairs and data of a domain knowledge base of human-generated text, and the classification is performed based on at least the comparison and the n-gram comparison.

Another aspect provides a method for identifying hallucinations in generative artificial intelligence (AI) output, including receiving a text output generated by a generative large language model (LLM) in response to an input prompt including origin source text data, and extracting entities from the text output and from the origin source text data using an entity extraction model, the entity extraction model being a named entity recognition (NER) model or a term frequency-inverse document frequency (TF-IDF) model. The method further includes forming first semantic pairs from the entities of the text output and second semantic pairs from the entities of the origin source text data, semantically comparing the first semantic pairs with the second semantic pairs using a semantic comparison model, based on at least the comparison classifying whether or not any of the first semantic pairs is a hallucination, and outputting an indication of the classification, the indication visually indicating at least one of the first semantic pairs that is classified as a hallucination within the output text with one or more of font formatting, color, labels, shapes, symbols, and icons. In this aspect of the method, the entity extraction model has been trained on a domain knowledge base including text entities in a predetermined domain, to extract entities relevant to the predetermined domain from input text, and the semantic similarity model has been trained on the domain knowledge base to perform semantic comparison of input text in a manner that is sensitive to the predetermined domain.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed. The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computing system (100) for identifying hallucinations in generative artificial intelligence, AI, output, the computing system (100) comprising:
processing circuitry (12) configured to:
receive a text output (14) generated by a generative large language model, LLM, (16) in response to an input prompt (18) including origin source text data (20);
using an entity extraction model (26), extract first and second entities (28A, 28B) from the text output (14) and from the origin source text data (20);
using a semantic pairing model (30), form first semantic pairs (32A) from the first entities (28A) of the text output (14) and second semantic pairs (32B) from the second entities (28B) of the origin source text data (20);
using a semantic similarity model (38), semantically compare the first semantic pairs (32A) with the second semantic pairs (32B);
based on at least the comparison (40), classify whether or not any of the first semantic pairs (32A) is a hallucination; and
output an indication (52, 56, 58, 60) of the classification (44).

2. The computing system (100) of claim 1, wherein the indication (52, 56, 58, 60) includes a displayed overall probability or determination (54) that at least one of the first semantic pairs (32A) is a hallucination.

3. The computing system (100) of claim 1 or 2, wherein the entity extraction model (26) is a named entity recognition, NER, model or a term frequency-inverse document frequency, TF-IDF, model.

4. The computing system (100) of any one of the preceding claims, wherein the semantic pairing model (30) is a question and answer, Q&A, LLM.

5. The computing system (100) of any one of the preceding claims, wherein the processing circuitry (12) is further configured to extract and normalize the origin source text data (20) from an origin source before using the entity extraction model (26) to extract the entities (26A, 28B) from the origin source text data (20).

6. The computing system (100) of any one of the preceding claims, wherein
the processing circuitry (12) is further configured to, using an n-gram model (34), perform an n-gram comparison (36) between the first semantic pairs (32A) and data of a domain knowledge base (22) of human-generated text, and
the classification (44) is performed based on at least the comparison (40) and the n-gram comparison (36).

7. The computing system (100) of any one of the preceding claims, wherein the processing circuitry (12) is further configured to, at training time:
receive or generate a domain knowledge base (22) including text entities in a predetermined domain; and
train the entity extraction model (26) on the domain knowledge base (22) to extract entities relevant to the predetermined domain from input text.

8. The computing system (100) of any one of claims 1 to 6, wherein
the semantic similarity model (38) is a sentence transformer, and
the processing circuitry (12) is further configured to, at training time:
receive or generate a domain knowledge base (22) including text entities relevant to a predetermined domain; and
train the semantic similarity model (38) on the domain knowledge base (22) to perform semantic comparison of input text in a manner that is sensitive to the predetermined domain.

9. A computer-implemented method (300A) for identifying hallucinations in generative artificial intelligence, (AI, output, the method (300A) comprising:
receiving (302) a text output generated by a generative large language model, LLM, in response to an input prompt including origin source text data;
extracting (306) entities from the text output and from the origin source text data;
forming (308) first semantic pairs from the entities of the text output and second semantic pairs from the entities of the origin source text data;
semantically comparing (310) the first semantic pairs with the second semantic pairs;
based on at least the comparison, classifying (314) whether or not any of the first semantic pairs is a hallucination; and
outputting (316) an indication of the classification.

10. The method (300A) of claim 9, wherein the indication includes a displayed overall probability or determination that at least one of the first semantic pairs is a hallucination.

11. The method (300A) of claim 9 or 10, wherein the indication shows the classification individually for each of the first semantic pairs as a probability that each respective first semantic pair is a hallucination.

12. The method (300A) of any one of claims 9 to 11, wherein the text output of the LLM is a summary of the origin source text data.

13. The method (300A) of any one of claims 9 to 12, further comprising extracting and normalizing (304) the origin source text data from an origin source before extracting the entities from the origin source text data.

14. The method (300A) of any one of claims 9 to 13, further comprising performing (312) an n-gram comparison between the first semantic pairs and data of a domain knowledge base of human-generated text, wherein
the classification is performed based on at least the comparison and the n-gram comparison.

15. A computer-implemented method (300A, 300B) for identifying hallucinations in generative artificial intelligence (AI) output, the method (300A, 300B) comprising:
receiving (302) a text output generated by a generative large language model, LLM, in response to an input prompt including origin source text data;
extracting (306) entities from the text output and from the origin source text data using an entity extraction model, the entity extraction model being a named entity recognition, NER, model or a term frequency-inverse document frequency, TF-IDF, model;
forming (308) first semantic pairs from the entities of the text output and second semantic pairs from the entities of the origin source text data;
semantically comparing (310) the first semantic pairs with the second semantic pairs using a semantic comparison model;
based on at least the comparison, classifying (314) whether or not any of the first semantic pairs is a hallucination; and
outputting (316) an indication of the classification, the indication visually indicating at least one of the first semantic pairs that is classified as a hallucination within the output text with one or more of font formatting, color, labels, shapes, symbols, and icons, wherein
the entity extraction model has been trained (320) on a domain knowledge base including text entities in a predetermined domain, to extract entities relevant to the predetermined domain from input text, and
the semantic similarity model has been trained (322) on the domain knowledge base to perform semantic comparison of input text in a manner that is sensitive to the predetermined domain.
